# EUROPEAN PATENT SPECIFICATION

(11) **EP 3 382 233 B1**
(45) Date of publication and mention of the grant of the patent: **08.01.2020**
(21) Application number: 16868449.6
(22) Date of filing: 17.11.2016
(51) Int. Cl.: F16H 9/18, F16H 57/035

(54) **BELT-TYPE CONTINUOUSLY VARIABLE TRANSMISSION, AND METHOD FOR ATTACHING ACTUATOR IN BELT-TYPE CONTINUOUSLY VARIABLE TRANSMISSION**
STUFENLOSES RIEMENGETRIEBE UND VERFAHREN ZUM ANBRINGEN EINES AKTUATORS IN EINEM STUFENLOSEN RIEMENGETRIEBE
TRANSMISSION À VARIATION CONTINUE DE TYPE COURROIE ET PROCÉDÉ POUR FIXER UN ACTIONNEUR DANS LA TRANSMISSION À VARIATION CONTINUE DE TYPE COURROIE

(30) Priority: 26.11.2015 JP 2015230790
(43) Date of publication of application: 03.10.2018
(73) Proprietor: Honda Motor Co., Ltd., Tokyo 107-8556 (JP); Musashi Seimitsu Industry Co., Ltd., Aichi 441-8560 (JP)
(72) Inventor: MATSUURA, Kohei, Wako-shi Saitama 351-0193 (JP); YOSHIZAWA, Hiroyasu, Wako-shi Saitama 351-0193 (JP); MORITA, Go, Wako-shi Saitama 351-0193 (JP); INOSE, Koji, Wako-shi Saitama 351-0193 (JP); TAKAISHI, Yusuke, Wako-shi Saitama 351-0193 (JP); YOKOTANI, Hitoshi, Wako-shi Saitama 351-0193 (JP); OKAMOTO, Teruhisa, Toyohashi-shi Aichi 441-8560 (JP)
(74) Representative: Kiwit, Benedikt
(86) International application number: PCT/JP2016/084043
(87) International publication number: WO 2017/090501

(56) References cited:
- EP-A2- 1 741 964
- JP-A- 2011 033 067
- JP-A- 2015 092 100
- JP-A- 2015 172 382
- US-A1- 2015 094 176

## Description

### TECHNICAL FIELD

The present invention relates to an improvement of a belt-type continuously variable transmission that includes a primary shaft and a secondary shaft that are disposed parallel to each other with axes thereof being directed sideways, a drive pulley that is supported on the primary shaft, a driven pulley that is supported on the secondary shaft, a belt that is wound around the two pulleys, an arm that is relatively rotatably linked to a movable sheave of either one of the two pulleys via a bearing, a transmission case that houses the two pulleys, the belt and the arm, and an actuator that is attached to the transmission case and can change a groove width of the one pulley by driving the movable sheave via the arm, and to an improvement of a method for attaching an actuator in such a belt-type continuously variable transmission.

### BACKGROUND ART

Such a belt-type continuously variable transmission is already known, as disclosed in Patent Document 1 below.

US 2015 / 0 094 176 A1 shows a V-belt continuously variable transmission in which an actuator unit for driving a movable sheave is slidably supported by a transmission case that is formed by fastening a plurality of case members with a plurality of fastening members, for ensuring a sufficient space for slidably moving the actuator unit and enhancing workability of mounting and dismounting operation of the actuator unit. A flat mounting surface for mounting the actuator unit is formed on an outer surface of the transmission case. Also, a recessed portion recessed inwardly of the transmission case from the mounting surface is formed to have at an inner end thereof a fastening seat face for a specific fastening member out of the plurality of fastening members, the specific fastening member being disposed at a portion corresponding to the mounting surface. The whole specific fastening member is disposed inwardly of the transmission case relative to the mounting surface.

Patent Document 1: Japanese Patent Application Laid-open No. 2011-33067

### SUMMARY OF THE INVENTION

### PROBLEMS TO BE SOLVED BY THE INVENTION

In the arrangement disclosed in Patent Document 1 above, after inserting an output shaft of an actuator into a transmission case via an opening of the transmission case while inclining the output shaft with respect to a primary shaft, swinging the actuator until the output shaft becomes parallel to the primary shaft engages a squared U-shaped hook portion provided at the extremity of the output shaft with a pin of an arm, and it is therefore impossible to engage the hook portion with the pin of the arm while swinging the hook portion unless the gap between parallel portions of the squared U-shaped hook portion, which are engagement portions of the output shaft, is set so as to be considerably larger than the diameter of the pin, which is the engagement portion of the arm.

Therefore, consideration could be given to engaging the hook portion of the output shaft of the actuator with the pin of the arm by moving the hook portion toward the pin of the arm from one side in the direction in which the primary shaft and a secondary shaft are arranged after inserting the output shaft into the transmission case in parallel with the primary shaft and the secondary shaft. By so doing, merely moving the hook portion laterally would enable it to engage with the pin of the arm, it would therefore be unnecessary to swing the hook portion, and it would be possible to make the gap between the parallel portions of the hook portion substantially equal to the diameter of the pin of the arm, but since it would be necessary to move the output shaft laterally, the opening of the transmission case would need to be formed so as to be long in the direction of movement of the output shaft. With regard to the opening of the transmission case, since an inward protruding portion of the actuator that includes the output shaft is usually disposed at a position through which a phantom line joining the primary shaft and the secondary shaft passes so that the inward protruding portion is not affected by swaying of a belt, the opening becomes long along the phantom line, the distance between the primary shaft and the secondary shaft cannot be shortened, and there are restrictions when disposing a component such as a bolt or a sensor between the two shafts.

The present invention has been accomplished in light of such circumstances, and it is an object thereof to provide an arrangement in which an opening of a transmission case is disposed at a position through which a phantom line joining a primary shaft and a secondary shaft passes, an inward protruding portion of an actuator that includes an output shaft is disposed on the phantom line or in the vicinity thereof, and when carrying out attachment to the transmission case the inward protruding portion is moved toward an arm from one side in the direction in which the primary shaft and the secondary shaft are arranged, the opening not being long along the phantom line so that the distance between the primary shaft and the secondary shaft can be shortened and there are no restrictions when disposing a component such as a bolt or a sensor between the two shafts.

### MEANS FOR SOLVING THE PROBLEMS

In order to attain the above object, according to a first aspect of the present invention, there is provided a belt-type continuously variable transmission comprising a primary shaft and a secondary shaft that are disposed parallel to each other with axes thereof being directed sideways, a drive pulley that is supported on the primary shaft, a driven pulley that is supported on the secondary shaft, a belt that is wound around the two pulleys, an arm that is relatively rotatably linked to a movable sheave of either one of the two pulleys via a bearing, a transmission case that houses the two pulleys, the belt and the arm, and an actuator that is attached to the transmission case and can change a groove width of the one pulley by driving the movable sheave via the arm, an opening being formed in the transmission case on a phantom line that joins the primary shaft and the secondary shaft when viewed on a projection plane that is orthogonal to the axes of the two shafts, and the actuator having an inward protruding portion that protrudes into the transmission case through the opening, the inward protruding portion comprising an output shaft on which is provided a second engagement portion that can engage with a first engagement portion of the arm, and the second engagement portion of the output shaft projecting from the inward protruding portion engaging with the first engagement portion from one side in an arrangement direction of the two shafts within the transmission case, wherein in a state in which the actuator is attached to the transmission case, the inward protruding portion is disposed on the phantom line or in the vicinity thereof when viewed on the projection plane, a clearance portion is formed around the opening by cutting out a peripheral edge of the opening, the clearance portion having a size that enables the inward protruding portion inserted into the transmission case in a state in which the inward protruding portion is offset to one of upward and downward sides with respect to the phantom line to be moved toward the arm along a movement line that is inclined with respect to the phantom line, and the clearance portion being spaced from the inward protruding portion in the attached state in the offset direction, and the actuator comprising a covering portion having a size that can cover the entire opening, including the clearance portion, when the inward protruding portion is pivoted toward the phantom line side with an axis of the one pulley as a center.

Further, according to a second aspect of the present invention, in addition to the first aspect, the output shaft in the attached state is disposed on the phantom line when viewed on the projection plane.

Furthermore, according to a third aspect of the present invention, in addition to the first or second aspect, the clearance portion is disposed on a side below the phantom line.

Moreover, according to a fourth aspect of the present invention, in addition to any one of the first to third aspects, when viewed on the projection plane, the entire opening, including the clearance portion, is formed within a belt region in a state in which the belt ratio is a LOW state.

Further, according to a fifth aspect of the present invention, in addition to any one of the first to fourth aspects, exterior equipment of the actuator is disposed on an outer surface of the covering portion.

Furthermore, according to a sixth aspect of the present invention, in addition to any one of the first to fifth aspects, a transmission case-side guide rib is formed on a lower end part of the opening of the transmission case, the transmission case-side guide rib guiding insertion of the inward protruding portion into the transmission case.

Moreover, according to a seventh aspect of the present invention, in addition to any one of the first to sixth aspects, a crankcase-side guide rib is formed on an inside wall of the transmission case that opposes the opening, the crankcase-side guide rib guiding insertion of the inward protruding portion into the transmission case.

Further, according to an eighth aspect of the present invention, in addition to any one of the first to seventh aspect, the actuator is formed from a first case half body that has the inward protruding portion and the covering portion and a second case half body that defines a flattened housing space between the second case half body and the first case half body, a motor for driving the actuator is disposed within the inward protruding portion, a harness connected to the motor is housed within the housing space, a connector and a stay are disposed on an outer surface of a portion of the second case half body that protrudes further outward than the housing space, the connector supplying electric power to the motor via the harness and the stay being for fixing the connector to the outer surface of the second case half body, and the stay is fastened to the first case half body and the second case half body.

Furthermore, according to a ninth aspect of the present invention, there is provided a method for attaching an actuator in a belt-type continuously variable transmission comprising a primary shaft and a secondary shaft that are disposed parallel to each other with axes thereof being directed sideways, a drive pulley that is supported on the primary shaft, a driven pulley that is supported on the secondary shaft, a belt that is wound around the two pulleys, an arm that is relatively rotatably linked to a movable sheave of either one of the two pulleys via a bearing, a transmission case that houses the two pulleys, the belt and the arm, and an actuator that is attached to the transmission case and can change a groove width of the one pulley by driving the movable sheave via the arm, the transmission case having an opening on a phantom line that joins the primary shaft and the secondary shaft when viewed on a projection plane that is orthogonal to the axes of the two shafts, and the actuator having an inward protruding portion that protrudes into the transmission case through the opening, the inward protruding portion comprising an output shaft on which is provided a second engagement portion that can engage with a first engagement portion of the arm, and the inward protruding portion being disposed on the phantom line or in the vicinity thereof when viewed on the projection plane in a state in which the actuator is attached to the transmission case, the method comprising forming a clearance portion around the opening of the transmission case by cutting out a peripheral edge of the opening, the clearance portion being spaced from the inward protruding portion in the attached state in a direction offset to one of upward and downward sides with respect to the phantom line, inserting the inward protruding portion of the actuator into the transmission case via the opening in a state in which the inward protruding portion is offset to the one of upward and downward sides, subsequently moving the inward protruding portion toward the arm along a movement line that is inclined with respect to the phantom line so as to make the second engagement portion of the output shaft, which projects from the inward protruding portion, engage with the first engagement portion of the arm, and subsequently pivoting the inward protruding portion, in a state in which the second engagement portion is engaged with the first engagement portion, toward the phantom line side with the axis of the one pulley as a center so as to move the inward protruding portion on the phantom line or in the vicinity thereof when viewed on the projection plane.

### EFFECTS OF THE INVENTION

In accordance with the first aspect of the present invention, since the actuator has the inward protruding portion protruding into the transmission case via the opening formed in the transmission case, and the second engagement portion of the output shaft projecting from the inward protruding portion engages with the first engagement portion of the arm from one side in the arrangement direction of the primary shaft and the secondary shaft within the transmission case, it is possible, by merely moving the second engagement portion of the output shaft to one side in the arrangement direction of the primary shaft and the secondary shaft toward the arm relatively rotatably linked to the movable sheave, to carry out engagement between the second engagement portion and the first engagement portion of the arm. Because of this, it is unnecessary to swing the second engagement portion with respect to the first engagement portion, it is possible to make the dimensions of the engaged sections of the first and second engagement portions and substantially equal to each other, and these engagement portions can be fitted together without backlash.

Moreover, since the clearance portion, which has a size that enables the inward protruding portion inserted into the transmission case in a state in which the inward protruding portion is offset toward one of upward and downward sides with respect to the phantom line joining the primary shaft and the secondary shaft to be moved toward the arm along the movement line inclined with respect to the phantom line, is formed by cutting out the peripheral edge of the opening so that the clearance portion is spaced in the offset direction from the inward protruding portion in an attached state, it is possible to move the inward protruding portion on the phantom line or in the vicinity thereof when viewed on the projection plane orthogonal to the axes of the primary shaft and the secondary shaft by inserting the inward protruding portion of the actuator into the transmission case via the opening in a state in which the inward protruding portion is offset toward one of the upward and downward sides, then moving the inward protruding portion toward the arm along the movement line inclined with respect the phantom line, engaging the second engagement portion of the output shaft projecting from the inward protruding portion with the first engagement portion of the arm, and pivoting the inward protruding portion in this state toward the phantom line side with the axis of the one pulley as a center. Because of this, not only is it possible to avoid any influence of swaying of the belt on the inward protruding portion because the inward protruding portion is disposed on the phantom line or in the vicinity thereof, but it is also unnecessary to move the inward protruding portion toward the arm on the phantom line or in the vicinity thereof, even when the inward protruding portion is disposed on the phantom line or in the vicinity thereof, it is unnecessary to make the opening long along the phantom line, because of this it is possible to shorten the distance between the primary shaft and the secondary shaft, and it is also possible to eliminate restrictions when disposing a component such as a bolt or a sensor between the two shafts.

Moreover, since the actuator includes the covering portion that can cover the entire opening, including the clearance portion, when the inward protruding portion is pivoted to the phantom line side with the axis of the one pulley as a center, it is possible to reliably close the entire opening with the covering portion after the actuator is attached to the transmission case, and it is possible to make the covering portion function, in cooperation with the peripheral edge of the opening, as a guide when moving the inward protruding portion toward one side in the arrangement direction of the primary shaft and the secondary shaft.

Furthermore, in accordance with the second aspect of the present invention, since the output shaft in the attached state is disposed on the phantom line when viewed on the projection plane, it is possible to minimize the influence on the output shaft caused by swaying of the belt.

Moreover, in accordance with the third aspect of the present invention, since the clearance portion is disposed on the side below the phantom line, the operation of engaging the first and second engagement portions becomes easy.

That is, attachment and removal of the actuator to and from the transmission case are usually carried out in a state in which the transmission case is mounted on a vehicle body, etc., and the arm for moving the movable sheave is in a cantilevered state when its engagement with the output shaft is released, and is pivoted downward by gravity. In this arrangement, if the clearance portion is present on the side where gravity acts, that is, on the side below the phantom line, the engagement operation becomes easy.

Furthermore, in accordance with the fourth aspect of the present invention, when viewed on the projection plane, since the entire opening, including the clearance portion, is formed within the region of the belt when the belt ratio is a LOW state, it is possible to avoid interference between the actuator and the belt when the actuator is attached to the transmission case. Moreover, since the size of the opening of the transmission case is not increased unnecessarily, it is possible to appropriately set the size of the opening, thereby avoiding any degradation in the rigidity of the transmission case.

Furthermore, in accordance with the fifth aspect of the present invention, since the exterior equipment of the actuator is disposed on an outer surface of the covering portion, which is exposed to the outside, it is possible to utilize effectively a dead space, such as the outer face of the covering portion, which interferes with lightening of the weight of the actuator, as a part where a component is disposed.

Moreover, in accordance with the sixth aspect of the present invention, since the transmission case-side guide rib guiding insertion of the inward protruding portion of the actuator into the transmission case is formed on the lower end part of the opening of the transmission case, the ease of attaching the actuator is improved.

Furthermore, in accordance with the seventh aspect of the present invention, since the crankcase-side guide rib guiding insertion of the inward protruding portion of the actuator into the transmission case is formed on the inside wall of the transmission case opposing the opening, the ease of attaching the actuator is improved.

Moreover, in accordance with the eighth aspect of the present invention, since the actuator is formed from the first case half body having the inward protruding portion and the covering portion, and the second case half body defining between itself and the first case half body the flattened housing space, the motor for driving the actuator is disposed within the inward protruding portion, the harness connected to the motor is housed in the housing space, the connector for supplying electric power to the motor via the harness is disposed on the outer surface of a portion, protruding further outward than the housing space, of the second case half body, and the stay for fixing the connector to the outer surface of the second case half body is fastened to the first case half body and the second case half body, it is possible to cut the number of components such as fastening components.

Furthermore, in accordance with the ninth aspect of the present invention, since the clearance portion is formed around the opening of the transmission case by cutting out the peripheral edge of the opening, the clearance portion being spaced in a direction offset to one of upward and downward sides with respect to the phantom line from the inward protruding portion in an attached state, the second engagement portion of the output shaft projecting from the inward protruding portion is engaged with the first engagement portion of the arm by inserting the inward protruding portion of the actuator into the transmission case via the opening in a state in which the inward protruding portion is offset toward the one of the upward and downward sides and subsequently moving the inward protruding portion toward the arm along the movement line inclined with respect to the phantom line, and the inward protruding portion is then moved onto the phantom line or in the vicinity thereof when viewed on the projection plane by pivoting the inward protruding portion in a state in which the second engagement portion is engaged with the first engagement portion toward the phantom line side with the axis of the one pulley as a center, not only is it possible to avoid any influence of swaying of the belt on the inward protruding portion because of the inward protruding portion being disposed on the phantom line or in the vicinity thereof, but it is also unnecessary to move the inward protruding portion toward the arm on the phantom line or in the vicinity thereof; even when the inward protruding portion is disposed on the phantom line or in the vicinity thereof, the opening does not become long along the phantom line, it is possible to shorten the distance between the primary shaft and the secondary shaft, and there are no restrictions when disposing a component such as a bolt or a sensor between the two shafts.

### BRIEF DESCRIPTION OF DRAWINGS

[FIG. 1] FIG. 1 is a plan sectional view of a belt-type continuously variable transmission in an embodiment of the present invention. (first embodiment)
[FIG. 2] FIG. 2 is a side view of the belt-type continuously variable transmission in the embodiment of the present invention (view in the direction of arrow 2 in Fig. 1). (first embodiment)
[FIG. 3] FIG. 3 is an enlarged view of a portion shown by arrow 3 in FIG. 1. (first embodiment)
[FIG. 4] FIG. 4 is a sectional view along line 4-4 in FIG. 3. (first embodiment)
[FIG. 5] FIG. 5 (A) is a perspective view when a first case half body of an actuator is viewed from the outside of a transmission case, and FIG. 5 (B) is a perspective view when the first case half body of the actuator is viewed from the transmission case side. (first embodiment)
[FIG. 6] FIG. 6 is a perspective view when a second case half body of the actuator is viewed from the outside of the transmission case. (first embodiment)
[FIG. 7] FIG. 7 is a diagram for explaining the operation of attaching the actuator to the transmission case after an inward protruding portion of the actuator is inserted into the transmission case via an opening of the transmission case, FIG. 7 (A) showing an inserted state and FIG. 7 (B) showing an attached state. (first embodiment)
[FIG. 8] FIG. 8 is a sectional view along line 8-8 in FIG. 4. (first embodiment)

### EXPLANATION OF REFERENCE NUMERALS AND SYMBOLS

- 2: Primary shaft
- 3: Secondary shaft
- 4: Drive pulley
- 4b: Movable sheave (drive-side movable sheave)
- 5: Driven pulley
- 6: Belt
- 7: Transmission case
- 11: Arm
- 11a: First engagement portion (pin)
- 12: Actuator
- 13: Output shaft
- 13a: Second engagement portion (hook portion)
- 14: First case half body
- 14a: Covering portion
- 15: Second case half body
- 15a: Outer surface of second case half body
- 17: Housing space
- 18: Motor
- 21: Inward protruding portion
- 23: Opening
- 23a: Clearance portion
- 24: Exterior equipment (connector)
- 27: Harness
- 30: Stay
- 32: Transmission case-side guide rib
- 33: Inside wall of transmission case
- 34: Crankcase-side guide rib
- 1: Phantom line
- 1': Movement line

### MODES FOR CARRYING OUT THE INVENTION

An embodiment of the present invention is explained below by reference to the attached drawings.

### FIRST EMBODIMENT

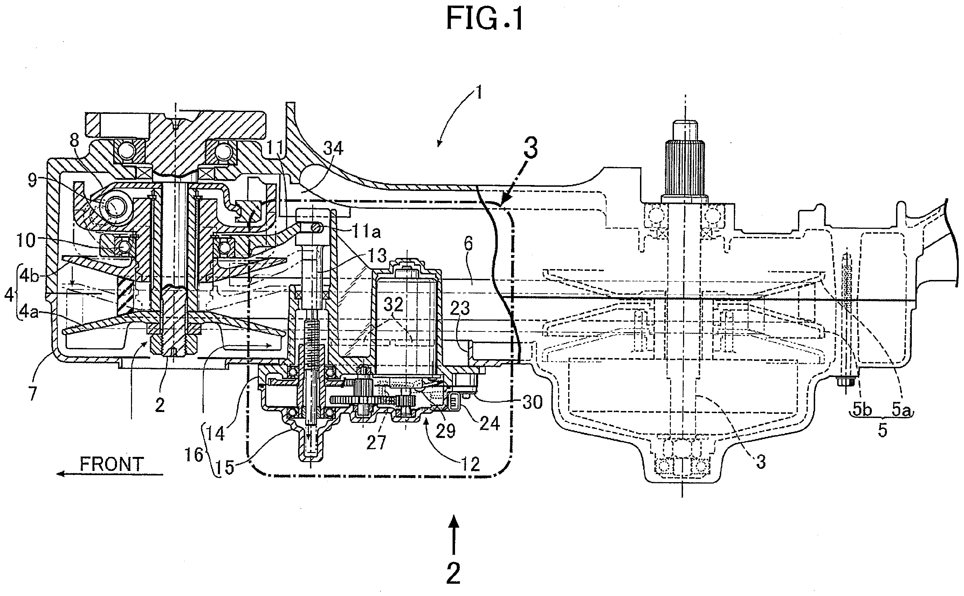

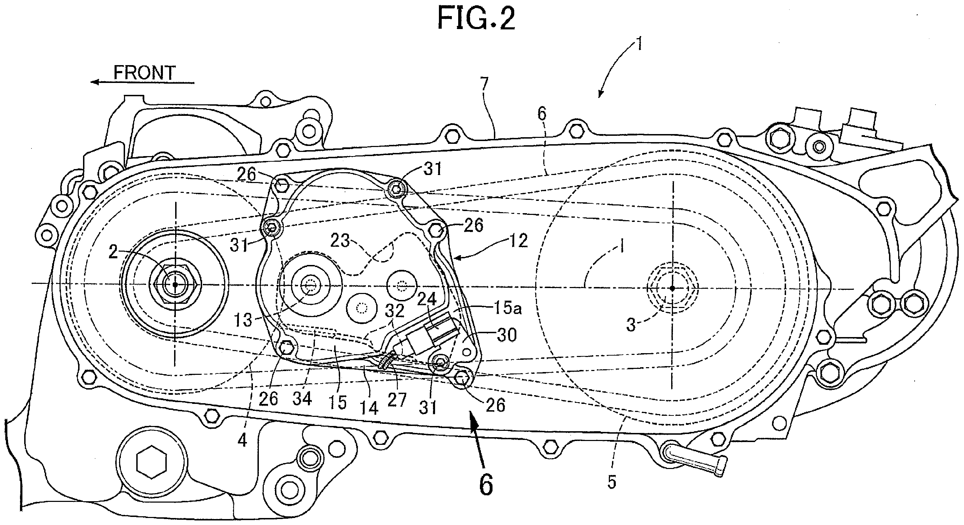

FIG. 1 is a plan sectional view of a belt-type continuously variable transmission related to the present invention, and FIG. 2 is a view in the direction of arrow 2 in Fig. 1.

As shown in FIG. 1 and FIG. 2, a belt-type continuously variable transmission 1 includes a primary shaft 2 and a secondary shaft 3 that are disposed parallel to each other with their axes being directed sideways, a drive pulley 4 that is supported on the primary shaft 2, a driven pulley 5 that is supported on the secondary shaft 3, a belt 6 that is wound around the two pulleys 4 and 5 and transmits driving force of the primary shaft 2 to the secondary shaft 3, and a transmission case 7 that houses the above. The primary shaft 2 is connected to a drive source, which is not illustrated, such as an engine, the secondary shaft 3 is connected to an output member, which is not illustrated, such as a driven wheel, and the belt-type continuously variable transmission 1 is mounted on a vehicle body, etc. of a two-wheeled motor vehicle.

The drive pulley 4 is formed from a drive-side fixed sheave 4a that is fixed to the primary shaft 2 and a drive-side movable sheave 4b that is supported on the primary shaft 2 and is movable with respect to the drive-side fixed sheave 4a. The driven pulley 5 is formed from a driven-side fixed sheave 5a that is fixed to the secondary shaft 3 and a driven-side movable sheave 5b that is supported on the secondary shaft 3 and is movable with respect to the driven-side fixed sheave 5a.

A ramp plate 8 is fixed to the primary shaft 2 behind the drive-side movable sheave 4b, and a plurality of centrifugal weights 9 are retained between the drive-side movable sheave 4b and the ramp plate 8. When the primary shaft 2 rotates and a centrifugal force that corresponds to the rotational speed thereof acts on the centrifugal weight 9, the centrifugal weight 9 moves radially outward along a cam face of the drive-side movable sheave 4b to thus move the drive-side movable sheave 4b toward the drive-side fixed sheave 4a side, and the winding radius of the belt 6 increases.

Furthermore, an arm 11 is relatively rotatably linked to one of the movable sheaves 4b and 5b of the two pulleys 4 and 5, the drive-side movable sheave 4b in the present embodiment, via a bearing 10. An actuator 12 that makes the drive-side movable sheave 4b move in the axial direction of the primary shaft 2 via the arm 11 so as to change the groove width of the drive pulley 4 in cooperation with the centrifugal weight 9 is connected to the arm 11 so that a hook portion 13a as a second engagement portion formed on an output shaft 13 is engaged with a pin 11a as a first engagement portion formed on the arm 11.

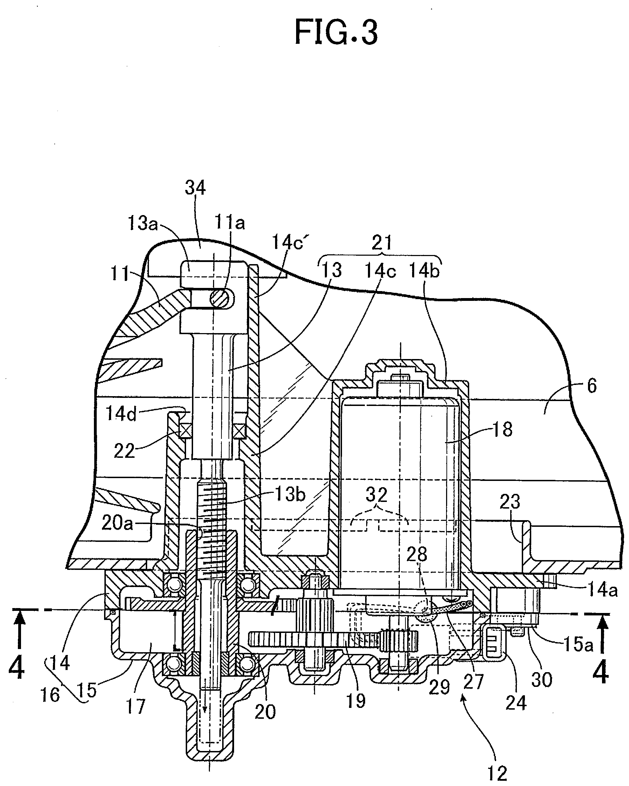

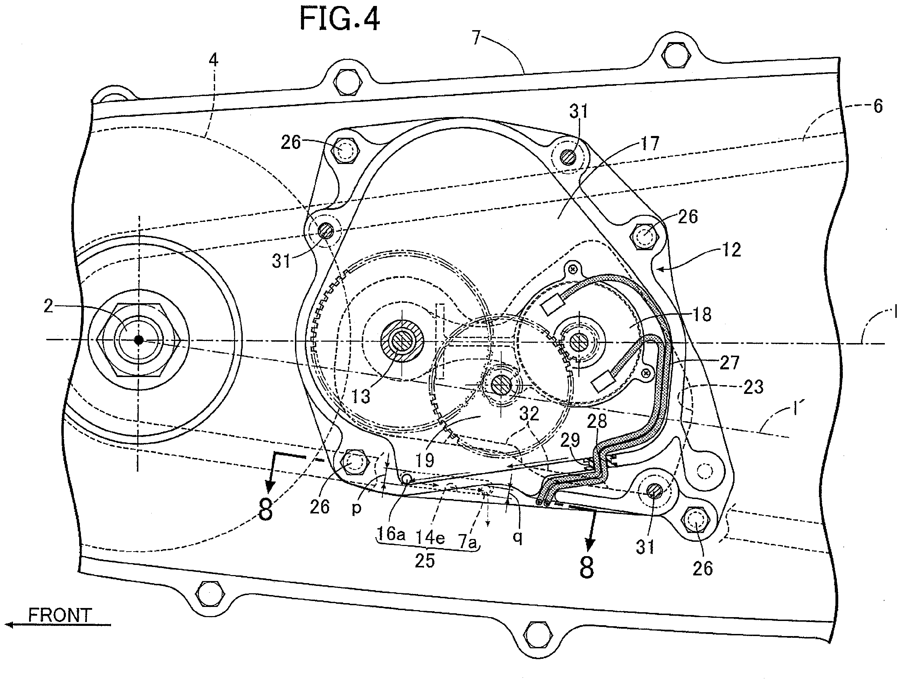

Referring in addition to FIG. 3, which is an enlarged view of a portion shown by arrow 3 in FIG. 1, and FIG. 4, which is a sectional view along line 4-4 in FIG. 3, the actuator 12 includes an actuator case 16 formed from a first case half body 14 and a second case half body 15 (FIG. 4 showing only the first case half body 14). The first case half body 14 has a flat plate-shaped covering portion 14a that defines a flattened housing space 17 between the first case half body 14 and the second case half body 15 and a bulge portion 14b that bulges from the covering portion 14a toward the interior of the transmission case 7. Disposed within the bulge portion 14b is a motor 18 as a drive source, and disposed within the housing space 17 are a harness 27 for supplying power to the motor 18, a reduction gear mechanism 19 for decreasing the speed of output of the motor 18, and a nut member 20 rotatingly driven by the motor 18 via the reduction gear mechanism 19.

A female thread 20a is formed on the inner periphery of the nut member 20, the output shaft 13, which has a male thread 13b that meshes with the female thread 20a, is slidably supported on a support tube 14c that bulges from the covering portion 14a of the first case half body 14 in the same direction as the bulge portion 14b and projects outside the support tube 14c, and when the nut member 20 receives rotation of the motor 18 and rotates, the output shaft 13 moves back and forth along the axis of the nut member 20. Because of this, a plate-shaped portion 14c' is projectingly provided at the extremity of the support tube 14c, the plate-shaped portion 14c' contacting a back face of the hook portion 13a to thus prevent the output shaft 13 from rotating, but a mechanism for preventing the output shaft 13 from rotating is not limited thereto.

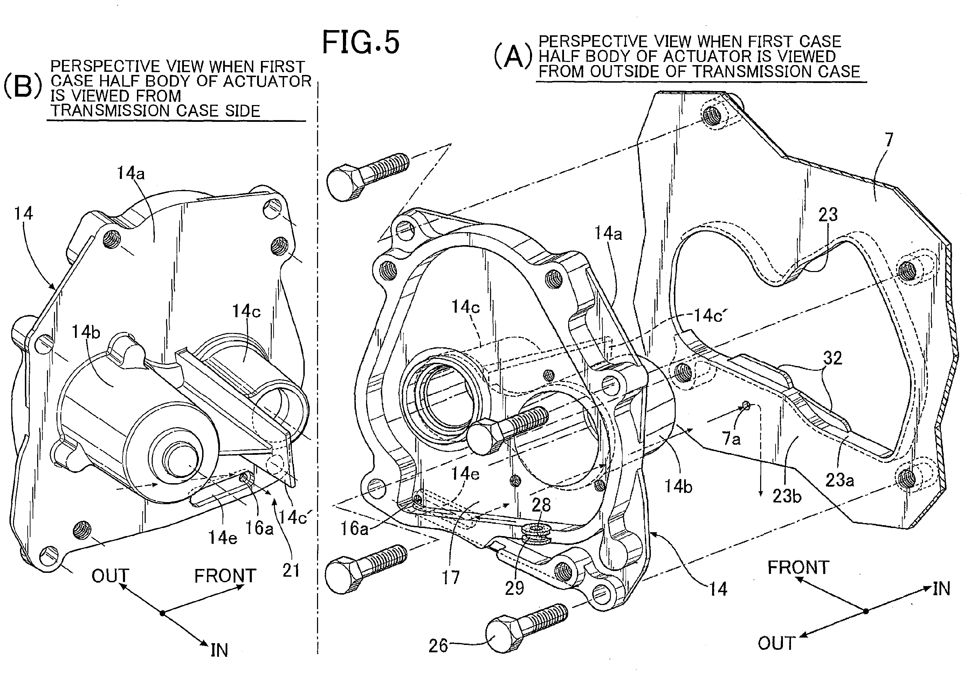

Referring in addition to FIG. 5, which shows perspective views when the first case half body 14 is viewed from the outside of the transmission case 7 and from the transmission case 7 side, in a state in which the actuator 12 is attached to the transmission case 7, the covering portion 14a of the first case half body 14 is attached to the transmission case 7 via a first bolt 26 so as to oppose an outer surface of the transmission case 7, and the bulge portion 14b having the motor 18 disposed in its interior, the support tube 14c and the output shaft 13 form an inward protruding portion 21 protruding into the transmission case 7.

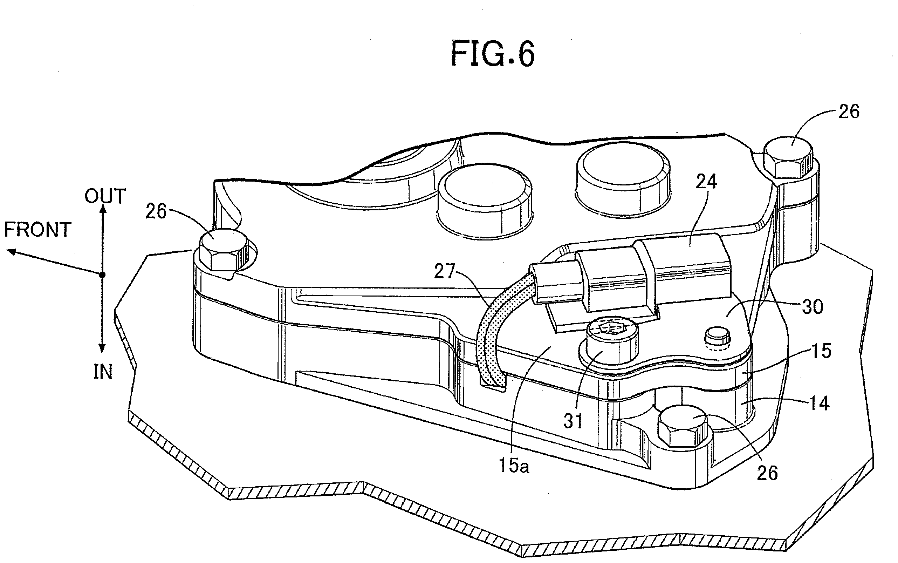

As is clear from FIG. 4, the harness 27 housed in the housing space 17 is led out from a communication hole 28 formed in a side wall of the actuator case 16 via a grommet 29. Furthermore, as is clear from FIG. 6, which is a perspective view when the second case half body 15 is viewed from the outside of the transmission case 7, a connector 24 and a stay 30 are disposed on an outer surface 15a of a portion of the second case half body 15 that protrudes further outward than the housing space 17, the connector 24 supplying electric power to the motor 18, and the stay 30 being for fixing the connector 24 to the outer surface 15a of the second case half body 15. The stay 30 is fastened to the first case half body 14 and the second case half body 15 by means of a second bolt 31, and this enables the stay 30 for securing the connector 24 to be fixed to the outer surface 15a of the second case half body 15 with a simple structure without increasing the number of components.

In the present embodiment, the connector 24 is fixed to the outer surface 15a of the portion, protruding further outward than the housing space 17, of the second case half body 15, but in a case in which an outer surface of the covering portion 14a of the first case half body 14 extends outward from a side wall of the second case half body 15, exterior equipment such as the connector 24 may be disposed on the outer surface of the covering portion 14a, and in this case due to exterior equipment of the actuator 12 being disposed on the outer surface of the covering portion 14a exposed to the outside, it becomes possible to utilize effectively, as a part for placing a component, dead space that prevents the weight of the actuator 12 from being lightened, such as the outer surface of the covering portion 14a.

When the output shaft 13 is moved back and forth by rotation of the nut member 20, in order to transmit the back and forth movement to the arm 11, the hook portion 13a formed at the extremity of the output shaft 13 is formed into a squared U shape so that the gap between the parallel portions engages with the pin 11a of the arm 11. Furthermore, the gap between parallel portions of the hook portion 13a is formed so as to be substantially equal to the diameter of the pin 11a, and moving the hook portion 13a in parallel from one side in the arrangement direction of the primary shaft 2 and the secondary shaft 3 toward the pin 11a enables the hook portion 13a and the pin 11a to be engaged without backlash. Moreover, an opening 14d at the extremity of the support tube 14c, through which the output shaft 13 extends, is sealed with a seal member 22, thus preventing dirt, etc. from entering the actuator case 16.

The shapes of the first and second engagement portions 11a and 13a of the arm 11 and the output shaft 13 are not limited to a pin and a squared U-shaped hook portion, and may be any shape that enables the two engagement portions 11a and 13a to be engaged without backlash when moving the second engagement portion 13a of the output shaft 13 towards the first engagement portion 11a of the arm 11 from one side of the arrangement direction of the primary shaft 2 and the secondary shaft 3, such as for example the first engagement portion 11a of the arm 11 being a round hole and the second engagement portion 13a of the output shaft 13 being a round rod that is fitted into the round hole.

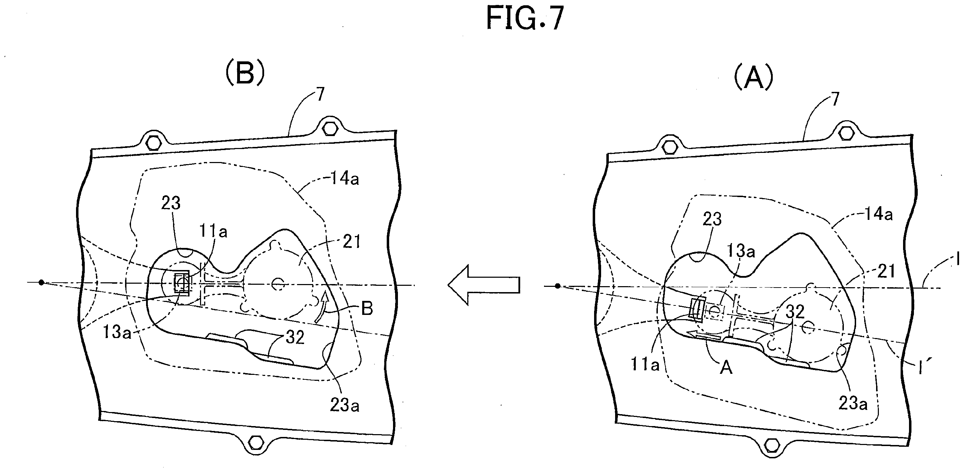

Referring in addition to FIG. 7 (A) and (B), an opening 23 is disposed in the transmission case 7 at a position through which a phantom line 1 joining the primary shaft 2 and the secondary shaft 3 passes when viewed on a projection plane orthogonal to the axes of the two shafts 2 and 3, the opening 23 being for the inward protruding portion 21 to be inserted into the transmission case 7 and the hook portion 13a of the output shaft 13 to be engaged with the pin 11a of the arm 11. A clearance portion 23a is formed as shown in FIG. 7 (A) around the opening 23 by cutting out the peripheral edge of the opening 23. The clearance portion 23a has a size that enables the hook portion 13a to be engaged with the pin 11a by moving, as shown by arrow A, the inward protruding portion 21 inserted into the transmission case 7 at a position offset to one of upward and downward sides from the phantom line I, to the downward side in this embodiment, toward the arm 11 along a movement line 1' that is inclined with respect to the phantom line 1 so that the clearance portion 23a is spaced in the direction offset from the inward protruding portion 21 in the attached state.

Formed on a lower end part of the opening 23 of the transmission case 7 is a transmission case-side guide rib 32 that guides insertion of the inward protruding portion 21 into the transmission case 7, and formed on an inside wall 33 of the transmission case 7 opposing the opening 23 is a crankcase-side guide rib 34 that guides an extremity part of the inward protruding portion 21. The ease with which the inward protruding portion 21 of the actuator 12 is attached to the interior of the transmission case 7 is thus improved.

Moreover, as shown in FIG. 7 (B), the covering portion 14a of the first case half body 14 protrudes further outward than the housing space 17 so as to cover the entire opening 23, including the clearance portion 23a, when the inward protruding portion 21 is pivoted as shown by arrow B toward the phantom line 1 side with the axis of the pulley 4 as a center after the hook portion 13a is engaged with the pin 11a, and the entire opening 23 can be reliably closed with the covering portion 14a after the actuator 12 is attached to the transmission case 7 as shown in FIG. 6 (B). Furthermore, the covering portion 14a abuts against a peripheral edge 23b of the opening 23 of the transmission case 7 from the outside when the inward protruding portion 21 is inserted into the transmission case 7, thus restricting movement in the insertion direction, and also functions as a guide when moving the inward protruding portion 21 in the arrangement direction of the primary shaft 2 and the secondary shaft 3 in cooperation with the peripheral edge 23b.

With regard to the actuator 12, it is desirable that a breather passage is provided in the actuator case 16, which forms an outer shell of the actuator 12, because the temperature within the actuator case 16 changes rapidly due to intermittent generation of heat by the motor 18, but if such a breather passage is exposed to the outside of the transmission case 7 from a wall face of the actuator case 16, the entrance of water or dirt is instead allowed via the exposed part.

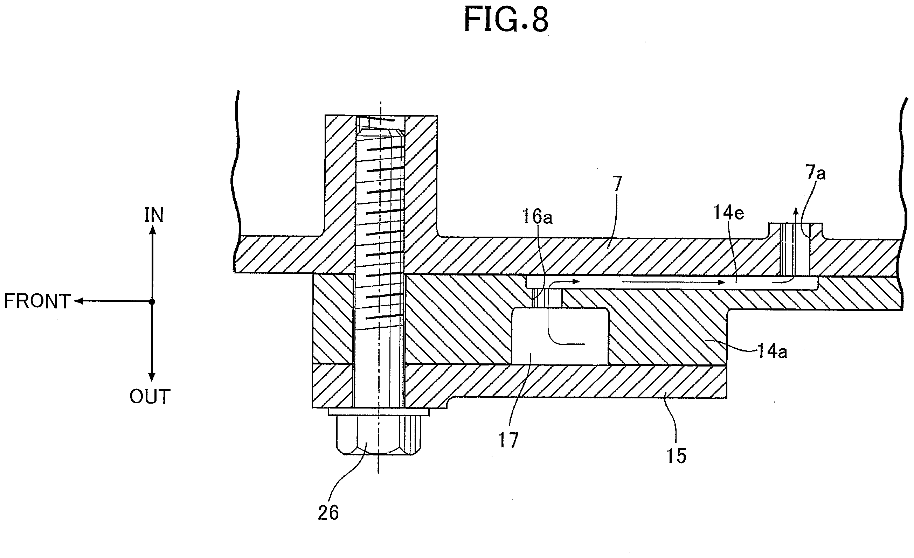

In the present embodiment, as shown in FIG. 4, FIG. 5 and FIG. 8, a transmission case through hole 7a is formed in the peripheral edge 23b of the opening 23 of the transmission case 7 so as to extend from the interior to the exterior of the transmission case 7, an actuator case through hole 16a is formed in a portion, corresponding to the housing space 17, of the covering portion 14a of the actuator case 16 so as to extend from the interior to the exterior of the actuator case 16, and a groove-shaped passage 14e is formed in the covering portion 14a on a mating face between the peripheral edge 23b of the opening 23 and the covering portion 14a, one end of the actuator case through hole 16a opening in the groove-shaped passage 14e. The groove-shaped passage 14e moves as shown in FIG. 4 toward the transmission case through hole 7a side up to a position where the groove-shaped passage 14e opposes one end of the transmission case through hole 7a in a state in which the actuator case 16 is attached to the transmission case 7, and provides communication between the transmission case through hole 7a and the actuator case through hole 16a, and it is therefore possible for the two through holes 7a and 16a and the groove-shaped passage 14e to form a drainage/breather passage 25 that makes it possible to adjust the pressure within the actuator case 16 and discharge water within the actuator case 16 to the interior of the transmission case 7.

In this arrangement, as shown in FIG. 4, displacement between the groove-shaped passage 14e and the transmission case through hole 7a when attaching the actuator case 16 to the transmission case 7 is eliminated by setting a width p of at least a portion, opposing the transmission case through hole 7a, of the groove-shaped passage 14e so as to be larger than a radius q of the transmission case through hole 7a.

The groove-shaped passage 14e may be provided in the transmission case 7 or may be provided in both the actuator case 16 and the transmission case 7 so as to overlap in an attached state.

A method for attaching the actuator 12 to the transmission case 7 is now explained.

When attaching the actuator 12 to the transmission case 7, in this embodiment, in a state in which the belt ratio is a LOW state, as shown in FIG. 7 (A), the inward protruding portion 21 is inserted into the transmission case 7 at a position offset downward from the phantom line 1 in the opening 23. In this process, since the clearance portion 23a is formed around the opening 23 of the transmission case 7 by cutting out the peripheral edge of the opening 23, the clearance portion 23a being spaced in a direction offset to one of upward and downward sides with respect to the phantom line 1 from the inward protruding portion 21 in an attached state, it is possible to insert the inward protruding portion 21 at the above position.

Furthermore, since the transmission case-side guide rib 32, which guides insertion of the inward protruding portion 21 into the transmission case 7, and the crankcase-side guide rib 34 are formed on the lower end part of the opening 23 of the transmission case 7 and the inside wall 33 of the transmission case 7 opposing the opening 23, the ease with which the inward protruding portion 21 of the actuator 12 is attached to the transmission case 7 is improved. Moreover, since the entire opening 23, including the clearance portion 23a, is formed within the belt region when the belt ratio is in a LOW state, it is possible to avoid interference between the inward protruding portion 21 and the belt 6 when the actuator 12 is attached to the transmission case 7.

Subsequently, the hook portion 13a of the output shaft 13 is engaged with the pin 11a of the arm 11 by moving as shown by arrow A in FIG. 7 (A) the inward protruding portion 21, which has been inserted into the transmission case 7 via the opening 23, along the movement line 1' inclined with respect to the phantom line 1. In this process, since in this embodiment the arm 11 is supported from below by means of a rotation-preventing member, which is not illustrated, in order to prevent the arm 11 from being pivoted downward by gravity, the hook portion 13a can easily be engaged with the pin 11a.

In this way, the inward protruding portion 21 is inserted into the transmission case 7 at a position offset from the phantom line 1, the inward protruding portion 21 is moved toward the arm 11 along the movement line 1', the squared U-shaped hook portion 13a is engaged with the pin 11a of the arm 11, and the inward protruding portion 21 of the actuator 12 is then pivoted as shown in FIG. 7 (B) around the axis of the pulley 4 toward the phantom line 1 side, thus enabling the inward protruding portion 21 to be disposed on the phantom line 1 or in the vicinity of the phantom line 1. In this arrangement, the groove-shaped passage 14e opposes one end of the transmission case through hole 7a, and the drainage/breather passage 25 providing communication between the transmission case through hole 7a and the actuator case through hole 16a is formed as a labyrinth passage.

The operation of this embodiment is now explained.

Since the actuator 12 has the inward protruding portion 21 protruding into the transmission case 7 via the opening 23 formed in the transmission case 7, and the second engagement portion 13a of the output shaft 13 projecting from the inward protruding portion 21 engages with the first engagement portion 11a of the arm 11 from one side in the arrangement direction of the primary shaft 2 and the secondary shaft 3 within the transmission case 7, it is possible, by merely moving the second engagement portion 13a of the output shaft 13 to one side in the arrangement direction of the primary shaft 2 and the secondary shaft 3 toward the arm 11 relatively rotatably linked to the movable sheave 4b, to carry out engagement between the second engagement portion 13a and the first engagement portion 11a of the arm 11. Because of this, it is unnecessary to swing the second engagement portion 13a with respect to the first engagement portion 11a, it is possible to make the dimensions of the engaged sections of the first and second engagement portions 11a and 13a substantially equal to each other, and these engagement portions can be fitted together without backlash.

Moreover, since the clearance portion 23a, which has a size that enables the inward protruding portion 21 inserted into the transmission case 7 in a state in which the inward protruding portion 21 is offset toward one of upward and downward sides with respect to the phantom line 1 joining the primary shaft 2 and the secondary shaft 3 to be moved toward the arm 11 along the movement line 1' inclined with respect to the phantom line 1, is formed by cutting out the peripheral edge of the opening 23 so that the clearance portion 23a is spaced in the offset direction from the inward protruding portion 21 in an attached state, it is possible to move the inward protruding portion 21 on the phantom line 1 or in the vicinity thereof when viewed on the projection plane orthogonal to the axes of the primary shaft 2 and the secondary shaft 3 by inserting the inward protruding portion 21 of the actuator 12 into the transmission case 7 via the opening 23 in a state in which the inward protruding portion 21 is offset toward one of the upward and downward sides, then moving the inward protruding portion 21 toward the arm 11 along the movement line 1' inclined with respect the phantom line 1, engaging the second engagement portion 13a of the output shaft 13 projecting from the inward protruding portion 21 with the first engagement portion 11a of the arm 11, and pivoting the inward protruding portion 21 in this state toward the phantom line 1 side with the axis of the one pulley as a center. Because of this, not only is it possible to avoid any influence of swaying of the belt 6 on the inward protruding portion 21 because the inward protruding portion 21 is disposed on the phantom line 1 or in the vicinity thereof, but it is also unnecessary to move the inward protruding portion 21 toward the arm 11 on the phantom line 1 or in the vicinity thereof, even when the inward protruding portion 21 is disposed on the phantom line 1 or the in vicinity thereof, it is unnecessary to make the opening 23 long along the phantom line 1, because of this it is possible to shorten the distance between the primary shaft 2 and the secondary shaft 3, and it is also possible to eliminate restrictions when disposing a component such as a bolt or a sensor between the two shafts 2 and 3.

Moreover, since the actuator 12 includes the covering portion 14a that can cover the entire opening 23, including the clearance portion 23a, when the inward protruding portion 21 is pivoted to the phantom line 1 side with the axis of the pulley 4 as a center, it is possible to reliably close the entire opening 23 with the covering portion 14a after the actuator 12 is attached to the transmission case 7, and it is possible to make the covering portion 14a function, in cooperation with the peripheral edge of the opening 23, as a guide when moving the inward protruding portion 21 toward one side in the arrangement direction of the primary shaft 2 and the secondary shaft 3.

Furthermore, since the output shaft 13 in the attached state is disposed on the phantom line 1 when viewed on the projection plane, it is possible to minimize the influence on the output shaft 13 caused by swaying of the belt 6.

Moreover, since the clearance portion 23a of the opening 23 is disposed below the phantom line 1, it is possible by merely supporting the arm 11 from below to prevent the arm 11 from rotating, thus making the engagement operation easy. Furthermore, a rotation-preventing member only for supporting the arm 11 from below has a simple structure, and does not interfere with the inward protruding portion 21 after the output shaft 13 is engaged with the arm 11.

Furthermore, when viewed on the projection plane, since the entire opening 23, including the clearance portion 23a, is formed within the region of the belt 6 when the belt ratio is a LOW state, it is possible to avoid interference between the actuator 12 and the belt 6 when the actuator 12 is attached to the transmission case 7, and since the size of the opening 23 of the transmission case 7 is not increased unnecessarily, it is possible to appropriately set the size of the opening 23, thereby avoiding any degradation in the rigidity of the transmission case 7.

In addition, although it is not illustrated, when exterior equipment such as the connector 24 for supplying electric power to the motor 18 is disposed on an outer surface of the covering portion 14a extending outward from the side wall of the second case half body 15, it is possible to utilize effectively dead space, which interferers with lightening of the weight of the actuator 12, as a part for the exterior equipment to be placed.

Furthermore, since the transmission case-side guide rib 32, which guides insertion of the inward protruding portion 21 of the actuator 12 into the transmission case 7, is formed on the lower end part of the opening 23 of the transmission case 7, and the crankcase-side guide rib 34, which guides the extremity part of the inward protruding portion 21, is formed on the inside wall 33 of the transmission case 7 opposing the opening 23, the ease with which the inward protruding portion 21 of the actuator is attached to the transmission case 7 is improved.

Moreover, since the actuator 12 is formed from the first case half body 14 having the inward protruding portion 21 and the covering portion 14a, and the second case half body 15 defining between itself and the first case half body 14 the flattened housing space 17, the motor 18 for driving the actuator 12 is disposed within the inward protruding portion 21, the harness 27 connected to the motor 18 is housed in the housing space 17, the connector 24 for supplying electric power to the motor 18 via the harness 27 is disposed on the outer surface 15a of a portion, protruding further outward than the housing space 17, of the second case half body 15, and the stay 30 for fixing the connector 24 to the outer surface 15a of the second case half body 15 is fastened to the first case half body 14 and the second case half body 15, it is possible to cut the number of components such as fastening components.

Furthermore, since the clearance portion 23a is formed around the opening 23 of the transmission case 7 by cutting out the peripheral edge of the opening 23, the clearance portion 23a being spaced in a direction offset to one of upward and downward sides with respect to the phantom line 1 from the inward protruding portion 21 in an attached state, the second engagement portion 13a of the output shaft 13 projecting from the inward protruding portion 23 is engaged with the first engagement portion 11a of the arm 11 by inserting the inward protruding portion 21 of the actuator 12 into the transmission case 7 via the opening 23 in a state in which the inward protruding portion 21 is offset toward the one of the upward and downward sides and subsequently moving the inward protruding portion 23 toward the arm 11 along the movement line l'inclined with respect to the phantom line 1, and the inward protruding portion 23 is then moved on the phantom line 1 or in the vicinity thereof when viewed on the projection plane by pivoting the inward protruding portion 23 in a state in which the second engagement portion 13a is engaged with the first engagement portion 11a toward the phantom line 1 side with the axis of the one pulley as a center, not only is it possible to avoid any influence of swaying of the belt 6 on the inward protruding portion 23 because of the inward protruding portion 23 being disposed on the phantom line 1 or in the vicinity thereof, but it is also unnecessary to move the inward protruding portion 23 toward the arm 11 on the phantom line 1 or in the vicinity thereof; even when the inward protruding portion 23 is disposed on the phantom line 1 or in the vicinity thereof, the opening 23 does not become long along the phantom line 1, it is possible to shorten the distance between the primary shaft 2 and the secondary shaft 3, and there are no restrictions when disposing a component such as a bolt or a sensor between the two shafts 2 and 3.

Furthermore, since the transmission case through hole 7a is formed in the peripheral edge 23b of the opening 23of the transmission case 7 so as to extend from the interior to the exterior of the transmission case 7, the actuator case through hole 16a is formed in a portion, corresponding to the housing space 17, of the covering portion 14a of the actuator case 16 so as to extend from the interior to the exterior of the actuator case 16 and, moreover, the groove-shaped passage 14e, in which one end of the actuator case through hole 16a opens, is formed in the covering portion 14a on a mating face between the peripheral edge 23b of the opening 23 and the covering portion 14a, the groove-shaped passage 14e opposing one end of the transmission case through hole 7a in a state in which the actuator case 16 is attached to the transmission case 7, it is possible to easily form the drainage/breather passage 25, which provides communication between the interior of the actuator case 16 and the interior of the transmission case 7. Furthermore, since the passage 25 opens within the transmission case 7 and the through holes 7a and 16a and the groove-shaped passage 14e form a labyrinth type passage, it is possible to prevent effectively dirty water from entering the actuator case 16 from the outside.

An embodiment of the present invention is explained above, but the present invention is not limited to the above embodiment and may be modified in a variety of ways as long as the modifications do not depart from the spirit and scope thereof.

For example, the belt-type continuously variable transmission of the present invention is not limited to one that is mounted on a vehicle body of a two-wheeled motor vehicle, etc., and it may be used as a continuously variable transmission of any mode. Furthermore, in the embodiment the drainage/breather passage 25 providing communication between the interior of the actuator case 16 and the interior of the transmission case 7 is provided, but when such a passage is not required, it is not necessary to provide it.

## Claims

1. A belt-type continuously variable transmission comprising a primary shaft (2) and a secondary shaft (3) that are disposed parallel to each other with axes thereof being directed sideways, a drive pulley (4) that is supported on the primary shaft (2), a driven pulley (5) that is supported on the secondary shaft (3), a belt (6) that is wound around the two pulleys (4, 5), an arm (11) that is relatively rotatably linked to a movable sheave (4b) of either one of the two pulleys (4, 5) via a bearing (10), a transmission case (7) that houses the two pulleys (4, 5), the belt (6) and the arm (11), and an actuator (12) that is attached to the transmission case (7) and can change a groove width of said one pulley (4) by driving the movable sheave (4b) via the arm (11),
an opening (23) being formed in the transmission case (7) on a phantom line (1) that joins the primary shaft (2) and the secondary shaft (3) when viewed on a projection plane that is orthogonal to the axes of the two shafts (2, 3), and
the actuator (12) having an inward protruding portion (21) that protrudes into the transmission case (7) through the opening (23), the inward protruding portion (21) comprising an output shaft (13) on which is provided a second engagement portion (13a) that can engage with a first engagement portion (11a) of the arm (11), and the second engagement portion (13a) of the output shaft (13) projecting from the inward protruding portion (21) engaging with the first engagement portion (11a) from one side in an arrangement direction of the two shafts (2, 3) within the transmission case (7),
wherein in a state in which the actuator (12) is attached to the transmission case (7), the inward protruding portion (21) is disposed on the phantom line (1) or in the vicinity thereof when viewed on the projection plane,
a clearance portion (23a) is formed around the opening (23) by cutting out a peripheral edge of the opening (23), the clearance portion (23a) having a size that enables the inward protruding portion (21) inserted into the transmission case (7) in a state in which the inward protruding portion (21) is offset to one of upward and downward sides with respect to the phantom line (1) to be moved toward the arm (11) along a movement line (1') that is inclined with respect to the phantom line (1), and the clearance portion (23a) being spaced from the inward protruding portion (21) in the attached state in the offset direction, and
the actuator (12) comprising a covering portion (14a) having a size that can cover the entire opening (23), including the clearance portion (23a), when the inward protruding portion (21) is pivoted toward the phantom line (1) side with an axis of said one pulley (4) as a center.

2. The belt-type continuously variable transmission according to Claim 1, wherein the output shaft (13) in the attached state is disposed on the phantom line (1) when viewed on the projection plane.

3. The belt-type continuously variable transmission according to Claim 1 or Claim 2, wherein the clearance portion (23a) is disposed on a side below the phantom line (1).

4. The belt-type continuously variable transmission according to any one of Claim 1 to Claim 3, wherein when viewed on the projection plane, the entire opening (23), including the clearance portion (23a), is formed within a belt region in a state in which the belt ratio is a LOW state.

5. The belt-type continuously variable transmission according to any one of Claim 1 to Claim 4, wherein exterior equipment (24) of the actuator (12) is disposed on an outer surface of the covering portion (14a).

6. The belt-type continuously variable transmission according to any one of Claim 1 to Claim 5, wherein a transmission case-side guide rib (32) is formed on a lower end part of the opening (23) of the transmission case (7), the transmission case-side guide rib (32) guiding insertion of the inward protruding portion (21) into the transmission case (7).

7. The belt-type continuously variable transmission according to any one of Claim 1 to Claim 6, wherein a crankcase-side guide rib (34) is formed on an inside wall (33) of the transmission case (7) that opposes the opening (23), the crankcase-side guide rib (34) guiding insertion of the inward protruding portion (21) into the transmission case (7).

8. The belt-type continuously variable transmission according to any one of Claim 1 to Claim 7, wherein the actuator (12) is formed from a first case half body (14) that has the inward protruding portion (21) and the covering portion (14a) and a second case half body (15) that defines a flattened housing space (17) between the second case half body (15) and the first case half body (14), a motor (18) for driving the actuator (12) is disposed within the inward protruding portion (21), a harness (27) connected to the motor (18) is housed within the housing space (17), a connector (24) and a stay (30) are disposed on an outer surface (15a) of a portion of the second case half body (15) that protrudes further outward than the housing space (17), the connector (24) supplying electric power to the motor (18) via the harness (27) and the stay (30) being for fixing the connector (24) to the outer surface (15a) of the second case half body (15), and the stay (30) is fastened to the first case half body (14) and the second case half body (15).

9. A method for attaching an actuator in a belt-type continuously variable transmission comprising a primary shaft (2) and a secondary shaft (3) that are disposed parallel to each other with axes thereof being directed sideways, a drive pulley (4) that is supported on the primary shaft (2), a driven pulley (5) that is supported on the secondary shaft (3), a belt (6) that is wound around the two pulleys (4, 5), an arm (11) that is relatively rotatably linked to a movable sheave (4b) of either one of the two pulleys (4, 5) via a bearing (10), a transmission case (7) that houses the two pulleys (4, 5), the belt (6) and the arm (11), and an actuator (12) that is attached to the transmission case (7) and can change a groove width of said one pulley (4) by driving the movable sheave (4b) via the arm (11), the transmission case (7) having an opening (23) on a phantom line (1) that joins the primary shaft (2) and the secondary shaft (3) when viewed on a projection plane that is orthogonal to the axes of the two shafts (2, 3), and the actuator (12) having an inward protruding portion (21) that protrudes into the transmission case (7) through the opening (23), the inward protruding portion (21) comprising an output shaft (13) on which is provided a second engagement portion (13a) that can engage with a first engagement portion (11a) of the arm (11), and the inward protruding portion (21) being disposed on the phantom line (1) or in the vicinity thereof when viewed on the projection plane in a state in which the actuator (12) is attached to the transmission case (7),
the method comprising forming a clearance portion (23a) around the opening (23) of the transmission case (7) by cutting out a peripheral edge of the opening (23), the clearance portion (23a) being spaced from the inward protruding portion (21) in the attached state in a direction offset to one of upward and downward sides with respect to the phantom line (1), inserting the inward protruding portion (21) of the actuator (12) into the transmission case (7) via the opening (23) in a state in which the inward protruding portion (21) is offset to said one of upward and downward sides, subsequently moving the inward protruding portion (21) toward the arm (11) along a movement line (1') that is inclined with respect to the phantom line (1) so as to make the second engagement portion (13a) of the output shaft (13), which projects from the inward protruding portion (21), engage with the first engagement portion (11a) of the arm (11), and subsequently pivoting the inward protruding portion (21), in a state in which the second engagement portion (13a) is engaged with the first engagement portion (11a), toward the phantom line (1) side with the axis of said one pulley (4) as a center so as to move the inward protruding portion (21) onto the phantom line (1) or in the vicinity thereof when viewed on the projection plane.

## Patentansprüche

1. Stufenloses Riemengetriebe mit einer Primärwelle (2) und einer Sekundärwelle (3), welche parallel zueinander angeordnet sind, wobei ihre Achsen seitwärts gerichtet sind, einer Antriebsriemenscheibe (4), die auf der Primärwelle (2) gelagert ist, einer Abtriebsriemenscheibe (5), die auf der Sekundärwelle (3) gelagert ist, einem Riemen (6), der um die beiden Riemenscheiben (4, 5) herum gewickelt ist, einem Arm (11), der relativ drehbar mit einer beweglichen Seilrolle (4b) einer der beiden Riemenscheiben (4, 5) über ein Lager (10) verbunden ist, einem Getriebegehäuse (7), das die beiden Riemenscheiben (4, 5), den Riemen (6) und den Arm (11) aufnimmt, sowie einem Aktuator (12), der an dem Getriebegehäuse (7) angebracht ist und eine Rillenbreite der einen Riemenscheibe (4) verändern kann, indem er die bewegliche Seilrolle (4b) über den Arm (11) antreibt,
wobei eine Öffnung (23) in dem Getriebegehäuse (7) auf einer Phantomlinie (I) ausgebildet ist, welche bei Betrachtung auf einer Zeichenebene, die zu den Achsen der zwei Wellen (2, 3) orthogonal ist, die Primärwelle (2) mit der Sekundärwelle (3) verbindet, und
der Aktuator (12) einen nach innen vorstehenden Abschnitt (21) aufweist, der in das Getriebegehäuse (7) durch die Öffnung (23) vorsteht, wobei der nach innen vorstehende Abschnitt (21) eine Abtriebswelle (13) umfasst, auf welcher ein zweiter Eingriffsabschnitt (13a) vorgesehen ist, der in einen ersten Eingriffsabschnitt (11a) des Arms (11) eingreifen kann, und wobei der zweite Eingriffsabschnitt (13a) der Abtriebswelle (13), der aus dem nach innen vorstehenden Abschnitt (21) hervorragt, in den ersten Eingriffsabschnitt (11a) von einer Seite in einer Anordnungsrichtung der beiden Wellen (2, 3) in dem Getriebegehäuse (7) eingreift,
wobei, in einem Zustand, in dem der Aktuator (12) an dem Getriebegehäuse (7) angebracht ist, der nach innen vorstehende Abschnitt (21) bei Betrachtung auf der Zeichenebene auf der Phantomlinie (I) oder in der Nähe derselben angeordnet ist,
ein Spaltabschnitt (23a) um die Öffnung (23) herum ausgebildet ist, indem eine Umfangskante der Öffnung (23) ausgeschnitten wird, wobei der Spaltabschnitt (23a) eine Größe aufweist, die es ermöglicht, dass der in das Getriebegehäuse (7) eingeführte, nach innen vorstehende Abschnitt (21) in einem Zustand, in dem der nach innen vorstehende Abschnitt (21) zu einer der ansteigenden oder abfallenden Seite hin bezüglich der Phantomlinie (I) versetzt ist, zu dem Arm (11) hin entlang einer Bewegungslinie (I') bewegt wird, welche bezüglich der Phantomlinie (I) geneigt ist, und dass der Spaltabschnitt (23a) von dem nach innen vorstehenden Abschnitt (21) in dem angebrachten Zustand in der versetzten Richtung beabstandet ist, und
wobei der Aktuator (12) einen Abdeckungsbereich (14a) umfasst, der eine Größe aufweist, welche die gesamte Öffnung (23) einschließlich des Spaltabschnittes (23a) bedecken kann, wenn der nach innen vorstehende Abschnitt (21) zur Seite der Phantomlinie (I) hin mit einer Achse der einen Riemenscheibe (4) als Mittelpunkt verschwenkt wird.

2. Stufenloses Riemengetriebe nach Anspruch 1, wobei die Abtriebswelle (13) in dem angebrachten Zustand bei Betrachtung auf der Zeichenebene auf der Phantomlinie (I) angeordnet ist.

3. Stufenloses Riemengetriebe nach Anspruch 1 oder 2, wobei der Spaltabschnitt (23a) auf einer Seite unterhalb der Phantomlinie (I) angeordnet ist.

4. Stufenloses Riemengetriebe nach einem der Ansprüche 1 bis 3, wobei bei Betrachtung auf der Zeichenebene die gesamte Öffnung (23) einschließlich des Spaltabschnittes (23a) in einem Riemenbereich in einem Zustand ausgebildet ist, in welchem sich das Riemenverhältnis in einem NIEDRIGEN Zustand befindet.

5. Stufenloses Riemengetriebe nach einem der Ansprüche 1 bis 4, wobei die äußere Vorrichtung (24) des Aktuators (12) an einer Außenfläche des Abdeckungsbereiches (14a) angeordnet ist.

6. Stufenloses Riemengetriebe nach einem der Ansprüche 1 bis 5, wobei eine getriebegehäuseseitige Führungsrippe (32) an einem unteren Endteil der Öffnung (23) des Getriebegehäuses (7) ausgebildet ist, wobei die getriebegehäuseseitige Führungsrippe (32) das Einsetzen des nach innen vorstehenden Abschnittes (21) in das Getriebegehäuse (7) leitet.

7. Stufenloses Riemengetriebe nach einem der Ansprüche 1 bis 6, wobei eine kurbelkastenseitige Führungsrippe (34) an einer Innenwand (33) des Getriebegehäuses (7) ausgebildet ist, die der Öffnung (23) gegenüberliegt, wobei die kurbelkastenseitige Führungsrippe (34) das Einführen des nach innen vorstehenden Abschnittes (21) in das Getriebegehäuse (7) leitet.

8. Stufenloses Riemengetriebe nach einem der Ansprüche 1 bis 7, wobei der Aktuator (12) aus einer ersten Gehäusehälfte (14), die den nach innen vorstehenden Abschnitt (21) und den Abdeckungsabschnitt (14a) aufweist, und einer zweiten Gehäusehälfte (15) besteht, die einen abgeflachten Gehäusefreiraum (17) zwischen der zweiten Gehäusehälfte (15) und der ersten Gehäusehälfte (14) ausbildet, ein Motor (18) zum Ansteuern des Aktuators (12) in dem nach innen vorstehenden Abschnitt (21) angeordnet ist, ein mit dem Elektromotor (18) verbundener Kabelbaum (27) in dem Gehäusefreiraum (17) aufgenommen ist, ein Anschluss (24) und eine Strebe (30) an einer Außenfläche (15a) eines Abschnittes der zweiten Gehäusehälfte (15) angeordnet sind, welche weiter nach außen vorsteht als der Gehäusefreiraum (17), wobei der Anschluss (24) den Elektromotor (18) über den Kabelbaum (27) mit Strom versorgt und die Strebe (30) zur Fixierung des Anschlusses (24) an der Außenfläche (15a) der zweiten Gehäusehälfte (15) vorgesehen ist, und die Strebe (30) an der ersten Gehäusehälfte (14) und der zweiten Gehäusehälfte (15) befestigt ist.

9. Verfahren zum Anbringen eines Aktuators in einem stufenlosen Getriebe mit einer Primärwelle (2) und einer Sekundärwelle (3), welche parallel zueinander angeordnet sind, wobei ihre Achsen seitwärts gerichtet sind, einer Antriebsriemenscheibe (4), die auf der Primärwelle (2) gelagert ist, einer Abtriebsriemenscheibe (5), die auf der Sekundärwelle (3) gelagert ist, einem Riemen (6), der um die beiden Riemenscheiben (4, 5) herum gewickelt ist, einem Arm (11), der relativ drehbar mit einer beweglichen Seilrolle (4b) einer der beiden Riemenscheiben (4, 5) über ein Lager (10) verbunden ist, einem Getriebegehäuse (7), das die zwei Riemenscheiben (4, 5), den Riemen (6) und den Arm (11) aufnimmt, sowie einem Aktuator (12), der an dem Getriebegehäuse (7) angebracht ist und eine Rillenbreite der einen Riemenscheibe (4) durch Antreiben der beweglichen Seilrolle (4b) über den Arm (11) verändern kann, wobei das Getriebegehäuse (7) eine Öffnung (23) auf einer Phantomlinie (I) aufweist, welche bei Betrachtung auf einer Zeichenebene, welche zu den Achsen der beiden Wellen (2, 3) orthogonal ist, die Primärwelle (1) mit der Sekundärwelle (2) verbindet, und wobei der Aktuator (12) einen nach innen vorstehenden Abschnitt (21) aufweist, der durch die Öffnung (23) in das Getriebegehäuse (7) vorsteht, wobei der nach innen vorstehende Abschnitt (21) eine Abtriebswelle (13) umfasst, auf welcher ein zweiter Eingriffsabschnitt (13a) vorgesehen ist, der in einen ersten Eingriffsabschnitt (11a) des Arms (11) eingreifen kann, und wobei der nach innen vorstehende Abschnitt (21) bei Betrachtung auf der Zeichenebene in einem Zustand, in dem der Aktuator (12) an dem Getriebegehäuse (7) angebracht ist, auf der Phantomlinie (I) oder in der Nähe derselben angeordnet ist,
wobei das Verfahren das Ausbilden eines Spaltabschnittes (23a) um die Öffnung (23) des Getriebegehäuses (7) herum durch Ausschneiden einer Umfangskante der Öffnung (23), wobei der Spaltabschnitt (23a) von dem nach innen vorstehenden Abschnitt (21) im angebrachten Zustand in einer Richtung beabstandet ist, die zu einer der ansteigenden bzw. abfallenden Seiten bezüglich der Phantomlinie (I) versetzt ist, das Einführen des nach innen vorstehenden Abschnittes (21) des Aktuators (12) in das Getriebegehäuse (7) über die Öffnung (23) in einem Zustand, in welchem der nach innen vorstehende Abschnitt (21) zu der einen der ansteigenden bzw. abfallenden Seiten versetzt ist, anschließend das Bewegen des nach innen vorstehenden Abschnittes (21) in Richtung des Arms (11) entlang einer Bewegungslinie (I'), die bezüglich der Phantomlinie (I) geneigt ist, um den zweiten Eingriffsabschnitt (13a) der Abtriebswelle (13), der aus dem nach innen vorstehenden Abschnitt (21) hervorragt, mit dem ersten Eingriffsabschnitt (11a) des Arms (11) in Eingriff zu bringen, und daraufhin das Verschwenken des nach innen vorstehenden Abschnittes (21) in einem Zustand umfasst, in dem der zweite Eingriffsabschnitt (13a) in den ersten Eingriffsabschnitt (11a) eingreift, zur Seite der Phantomlinie (I) hin mit der Achse der einen Riemenscheibe (4) als Mittelpunkt, um den nach innen vorstehenden Abschnitt (21) bei Betrachtung auf der Zeichenebene auf die Phantomlinie (I) oder in die Nähe derselben zu bewegen.

## Revendications

1. Transmission à variation continue de type à courroie comprenant un arbre primaire (2) et un arbre secondaire (3) qui sont disposés parallèlement l'un à l'autre avec leurs axes dirigés à l'oblique, une poulie menante (4) qui est supportée sur l'arbre primaire (2), une poulie menée (5) qui est supportée sur l'arbre secondaire (3), une courroie (6) qui est enroulée autour des deux poulies (4, 5), un bras (11) qui est lié relativement en rotation à une demi-poulie coulissante d'embrayage (4b) de l'une ou l'autre des deux poulies (4, 5) via un palier (10), un carter de transmission (7) qui loge les deux poulies (4, 5), la courroie (6) et le bras (11), et un actionneur (12) qui est fixé au carter de transmission (7) et qui peut changer une largeur de gorge de ladite poulie (4) en entraînant la demi-poulie coulissante d'embrayage (4b) via le bras (11),
une ouverture (23) étant formée dans le carter de transmission (7) sur une ligne fantôme (I) qui joint l'arbre primaire (2) et l'arbre secondaire (3) lorsqu'elle est vue sur un plan de projection qui est orthogonal aux axes des deux arbres (2, 3), et
l'actionneur (12) ayant une portion saillant vers l'intérieur (21) qui fait saillie dans le carter de transmission (7) à travers l'ouverture (23), la portion saillant vers l'intérieur (21) comprenant un arbre de sortie (13) sur lequel est prévue une deuxième portion d'enclenchement (13a) qui peut s'enclencher avec une première portion d'enclenchement (11a) du bras (11), et la deuxième portion d'enclenchement (13a) de l'arbre de sortie (13) dépassant de la portion saillant vers l'intérieur (21) s'enclenchant avec la première portion d'enclenchement (11a) depuis un côté dans une direction d'agencement des deux arbres (2, 3) au sein du carter de transmission (7),
dans laquelle dans un état où l'actionneur (12) est fixé au carter de transmission (7), la portion saillant vers l'intérieur (21) est disposée sur la ligne fantôme (I) ou à proximité de celle-ci lorsqu'elle est vue sur le plan de projection,
une portion de débattement (23a) est formée autour de l'ouverture (23) en découpant un bord périphérique de l'ouverture (23), la portion de débattement (23a) ayant une taille qui permet de déplacer la portion saillant vers l'intérieur (21), insérée dans le carter de transmission (7) dans un état où la portion saillant vers l'intérieur (21) est décalée vers l'un de côtés vers le haut et vers le bas par rapport à la ligne fantôme (I), vers le bras (11) le long d'une ligne de déplacement (I') qui est inclinée par rapport à la ligne fantôme (I), et la portion de débattement (23a) étant espacée de la portion saillant vers l'intérieur (21) dans l'état fixé dans la direction de décalage, et
l'actionneur (12) comprenant une portion couvrante (14a) ayant une taille qui peut couvrir l'ouverture entière (23), comportant la portion de débattement (23a), lorsque la portion saillant vers l'intérieur (21) est pivotée vers le côté ligne fantôme (I) avec un axe de ladite poulie (4) comme centre.

2. Transmission à variation continue de type à courroie selon la revendication 1, dans laquelle l'arbre de sortie (13) dans l'état fixé est disposé sur la ligne fantôme (I) lorsqu'elle est vue sur le plan de projection.

3. Transmission à variation continue de type à courroie selon la revendication 1 ou la revendication 2, dans laquelle la portion de débattement (23a) est disposée sur un côté en dessous de la ligne fantôme (I).

4. Transmission à variation continue de type à courroie selon l'une quelconque de la revendication 1 à la revendication 3, dans laquelle lorsqu'elle est vue sur le plan de projection, l'ouverture entière (23), comportant la portion de débattement (23a), est formée au sein d'une région de courroie dans un état où le rapport de courroie est un état BAS.

5. Transmission à variation continue de type à courroie selon l'une quelconque de la revendication 1 à la revendication 4, dans laquelle un équipement extérieur (24) de l'actionneur (12) est disposé sur une surface extérieure de la portion couvrante (14a).

6. Transmission à variation continue de type à courroie selon l'une quelconque de la revendication 1 à la revendication 5, dans laquelle une nervure de guidage côté carter de transmission (32) est formée sur une partie d'extrémité inférieure de l'ouverture (23) du carter de transmission (7), la nervure de guidage côté carter de transmission (32) guidant l'insertion de la portion saillant vers l'intérieur (21) dans le carter de transmission (7).

7. Transmission à variation continue de type à courroie selon l'une quelconque de la revendication 1 à la revendication 6, dans laquelle une nervure de guidage côté carter-moteur (34) est formée sur une paroi intérieure (33) du carter de transmission (7) qui s'oppose à l'ouverture (23), la nervure de guidage côté carter-moteur (34) guidant l'insertion de la portion saillant vers l'intérieur (21) dans le carter de transmission (7).

8. Transmission à variation continue de type à courroie selon l'une quelconque de la revendication 1 à la revendication 7, dans laquelle l'actionneur (12) est formé d'un premier demi-corps de carter (14) qui a la portion saillant vers l'intérieur (21) et la portion couvrante (14a) et d'un deuxième demi-corps de carter (15) qui définit un espace de logement aplati (17) entre le deuxième demi-corps de carter (15) et le premier demi-corps de carter (14), un moteur (18) pour entraîner l'actionneur (12) est disposé au sein de la portion saillant vers l'intérieur (21), un harnais (27) connecté au moteur (18) est logé au sein de l'espace de logement (17), un connecteur (24) et un étai (30) sont disposés sur une surface extérieure (15a) d'une portion du deuxième demi-corps de carter (15) qui fait davantage saillie vers l'extérieur que l'espace de logement (17), le connecteur (24) fournissant une alimentation électrique au moteur (18) via le harnais (27) et l'étai (30) servant à fixer le connecteur (24) à la surface extérieure (15a) du deuxième demi-corps de carter (15), et l'étai (30) est fixé au premier demi-corps de carter (14) et au deuxième demi-corps de carter (15).

9. Procédé de fixation d'un actionneur dans une transmission à variation continue de type à courroie comprenant un arbre primaire (2) et un arbre secondaire (3) qui sont disposés parallèlement l'un à l'autre avec leurs axes dirigés à l'oblique, une poulie menante (4) qui est supportée sur l'arbre primaire (2), une poulie menée (5) qui est supportée sur l'arbre secondaire (3), une courroie (6) qui est enroulée autour des deux poulies (4, 5), un bras (11) qui est lié relativement en rotation à une demi-poulie coulissante d'embrayage (4b) de l'une ou l'autre des deux poulies (4, 5) via un palier (10), un carter de transmission (7) qui loge les deux poulies (4, 5), la courroie (6) et le bras (11), et un actionneur (12) qui est fixé au carter de transmission (7) et qui peut changer une largeur de gorge de ladite poulie (4) en entraînant la demi-poulie coulissante d'embrayage (4b) via le bras (11), le carter de transmission (7) ayant une ouverture (23) sur une ligne fantôme (I) qui joint l'arbre primaire (2) et l'arbre secondaire (3) lorsqu'elle est vue sur un plan de projection qui est orthogonal aux axes des deux arbres (2, 3), et l'actionneur (12) ayant une portion saillant vers l'intérieur (21) qui fait saillie dans le carter de transmission (7) à travers l'ouverture (23), la portion saillant vers l'intérieur (21) comprenant un arbre de sortie (13) sur lequel est prévue une deuxième portion d'enclenchement (13a) qui peut s'enclencher avec une première portion d'enclenchement (11a) du bras (11), et la portion saillant vers l'intérieur (21) étant disposée sur la ligne fantôme (I) ou à proximité de celle-ci lorsqu'elle est vue sur le plan de projection dans un état où l'actionneur (12) est fixé au carter de transmission (7),
le procédé comprenant la formation d'une portion de débattement (23a) autour de l'ouverture (23) du carter de transmission (7) en découpant un bord périphérique de l'ouverture (23), la portion de débattement (23a) étant espacée de la portion saillant vers l'intérieur (21) dans l'état fixé dans une direction décalée vers l'un des côtés vers le haut et vers le bas par rapport à la ligne fantôme (I), l'insertion de la portion saillant vers l'intérieur (21) de l'actionneur (12) dans le carter de transmission (7) via l'ouverture (23) dans un état où la portion saillant vers l'intérieur (21) est décalée vers l'un des côtés vers le haut et vers le bas, le déplacement ultérieur de la portion saillant vers l'intérieur (21) vers le bras (11) le long d'une ligne de déplacement (I') qui est inclinée par rapport à la ligne fantôme (I) de façon à amener la deuxième portion d'enclenchement (13a) de l'arbre de sortie (13), qui dépasse de la portion saillant vers l'intérieur (21), à s'enclencher avec la première portion d'enclenchement (11a) du bras (11), et le pivotement ultérieur de la portion saillant vers l'intérieur (21), dans un état où la deuxième portion d'enclenchement (13a) est enclenchée avec la première portion d'enclenchement (11a), vers le côté ligne fantôme (I) avec l'axe de ladite poulie (4) comme centre de façon à déplacer la portion saillant vers l'intérieur (21) sur la ligne fantôme (I) ou à proximité de celle-ci lorsqu'elle est vue sur le plan de projection.
